(19) Europäisches Patentamt
European Patent Office
Office européen des brevets

(11) **EP 3 172 528 B1**

(12) **EUROPÄISCHE PATENTSCHRIFT**

(45) Veröffentlichungstag und Bekanntmachung des Hinweises auf die Patenterteilung:
**30.06.2021   Patentblatt 2021/26**

(21) Anmeldenummer: **15742235.3**

(22) Anmeldetag: **24.07.2015**

(51) Int Cl.:
**G01B 11/25** *(2006.01)*    **B23Q 17/09** *(2006.01)*
**G03B 21/00** *(2006.01)*    **H04N 9/31** *(2006.01)*

(86) Internationale Anmeldenummer:
**PCT/EP2015/066994**

(87) Internationale Veröffentlichungsnummer:
**WO 2016/012590 (28.01.2016 Gazette 2016/04)**

(54) **VERFAHREN ZUR KALIBRIERUNG EINES LICHTPROJEKTORS MIT EINER OPTISCHEN KORREKTUR**

METHOD FOR CALIBRATING A LIGHT-PROJECTOR WITH OPTICAL CORRECTION

MÉTHODE DE CALIBRATION D'UN PROJECTEUR DE LUMIÈRE AVEC CORRECTION OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2014   DE 102014110538**

(43) Veröffentlichungstag der Anmeldung:
**31.05.2017   Patentblatt 2017/22**

(73) Patentinhaber: **E. Zoller GmbH & Co. KG Einstell- und Messgeräte
74385 Pleidelsheim (DE)**

(72) Erfinder:
- **BLAHUSCH, Gerhard**
  **82110 Germering (DE)**
- **NIVET, Jean-Marc**
  **85567 Grafing (DE)**
- **WENIGER, Klaus**
  **07646 Waldeck (DE)**
- **PFAU, Christian**
  **74379 Ingersheim (DE)**

(74) Vertreter: **Daub, Thomas
Patent- und Rechtsanwaltskanzlei Daub
Bahnhofstrasse 5
88662 Überlingen (DE)**

(56) Entgegenhaltungen:
DE-U1- 9 301 901        US-A1- 2001 017 687
US-A1- 2011 313 721    US-B1- 6 509 559

- **XU ZHANG: "Projector calibration from the camera image point of view", OPTICAL ENGINEERING., Bd. 48, Nr. 11, 1. November 2009 (2009-11-01), Seite 117208, XP055245253, BELLINGHAM ISSN: 0091-3286, DOI: 10.1117/1.3265551**
- **JUNHUI HUANG ET AL: "Calibration of a camera projector measurement system and error impact analysis", MEASUREMENT SCIENCE AND TECHNOLOGY, IOP, BRISTOL, GB, Bd. 23, Nr. 12, 23. Oktober 2012 (2012-10-23), Seite 125402, XP020233845, ISSN: 0957-0233, DOI: 10.1088/0957-0233/23/12/125402**
- **None**

EP 3 172 528 B1

**Beschreibung**

**Stand der Technik**

Aus dem Artikel von Zhang, X. & Zhu, L. "Projector calibration from the camera image point of view", Optical Engineering, November 2009, Band 48, Nummer 11, Seite 117208-1 bis 117208-13 und aus dem Artikel von Huang, J. et al. "Calibration of camera-projector measurement system and error impact analysis", Meas. Sci. Technol., October 2012, Band 23, Nummer 12, Seite 125402-1 bis 125402-14 sind bereits Verfahren zur Kalibrierung von Lichtprojektoren bekannt bei denen eine optische Korrektur verwendet wird.

**Vorteile der Erfindung**

Es wird ein nicht Teil der Erfindung bildender Lichtprojektor, insbesondere eines Werkzeugmessgeräts, beschrieben, der eine optische Korrektur aufweist, die dazu vorgesehen ist, eine bedingt durch einen Triangulationswinkel verursachte Verzerrung zumindest teilweise und besonders vorzugsweise zumindest im Wesentlichen vollständig zu entzerren. Durch eine entsprechende Einheit kann ein Prozess, insbesondere ein Messprozess, mit dem Lichtprojektor verbessert, und zwar insbesondere beschleunigt werden, und zwar insbesondere aufgrund dessen, dass zumindest teilweise auf eine rechnerische Korrektur verzichtet werden kann. Unter "zumindest teilweise entzerren" soll dabei verstanden werden, dass eine durch den Triangulationswinkel entstandene Verzerrung zumindest reduziert wird, vorzugsweise in zumindest einem Bereich um zumindest 10% und vorzugsweise um zumindest 50%. Unter "zumindest im Wesentlichen vollständig" soll dabei insbesondere verstanden werden, dass die projizierte Abbildung in jeder ihrer Dimensionen weniger als 10%, vorzugsweise weniger als 5% von einer entsprechenden unverzerrten Abbildung ohne Triangulationswinkel abweicht.

Unter einer "optischen Korrektur" soll dabei insbesondere eine von einer rechnerischen Korrektur abweichende Korrektur, insbesondere mittels optischer Korrekturmittel, wie insbesondere mittels Linsen und/oder Spiegeln, und/oder eine spezielle Anordnung von optischen Mitteln, wie Beleuchtung, Spiegeln, Linsen und/oder optischen Ebenen usw., verstanden werden. Die optische Korrektur kann von verschiedenen, dem Fachmann als sinnvoll erscheinenden Einheiten und/oder Anordnungen im Lichtprojektor gebildet sein, wie beispielsweise einer Linseneinheit usw. Besonders vorteilhaft wird die optische Korrektur jedoch zumindest teilweise durch eine Anordnung einer Projektorbildebene des Lichtprojektors und einer optischen Achse des Lichtprojektors in einem Tiltwinkel ungleich 45° und insbesondere auch ungleich 0° gebildet, wodurch vorteilhaft auf zusätzliche Bauteile für die optische Korrektur verzichtet werden kann. Die Projektorbildebene wird dabei vorzugsweise von einem Mikrospiegelarray gebildet.

Ferner weist der Lichtprojektor eine Recheneinheit auf, die dazu vorgesehen ist, ein Bilddatenpaket zu bearbeiten. Durch eine entsprechende Ausgestaltung kann ein vorteilhaft schneller Prozess, insbesondere ein schneller Messablauf, erreicht werden. Das Werkzeugmessgerät ist vorzugsweise zusätzlich als Werkzeugeinstellgerät ausgebildet. Ferner ist das Werkzeugmessgerät vorzugsweise dazu vorgesehen, Schneidkanten zu vermessen, und zwar insbesondere Schneidkantenverrundungen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "speziell programmiert" soll dabei insbesondere verstanden werden, dass in einem Speicher der Recheneinheit ein spezielles Betriebsprogramm abgelegt ist. Der Lichtprojektor ist dabei insbesondere dazu vorgesehen, gemeinsam mit einer Kamera dreidimensionale Strukturen in einer Auflösung kleiner als 1 mm, vorzugsweise kleiner als 0,5 mm und ganz besonders bevorzugt kleiner als 0,002 mm aufzunehmen.

In dem Bilddatenpaket, das vorzugsweise in Form einer Datei vorliegt, sind insbesondere Daten für zumindest zwei und vorzugsweise mehr als fünf Bilder, vorzugsweise für zweidimensionale Grauwertfelder, und vorzugsweise Daten für eine Zuordnung von Bildbereichen zu Projektoreinheiten, insbesondere zu Spiegelarrays, enthalten. Die zumindest zwei Bilder und vorzugsweise zumindest mehr als fünf Bilder sind zuvor, d.h. vor einem Übermitteln an den Lichtprojektor, generiert, beispielsweise mittels eines Grundmusters und mindestens einer Replizierungsvorschrift. Grundsätzlich können neben den übermittelten Daten für die Bilder jedoch auch noch vorzugsweise weitere Bilder im Lichtprojektor generiert werden. Ferner sind in dem Bilddatenpaket vorzugsweise Zeitregime enthalten, wie vorzugsweise Zeitregime für Aufnahmen einer Kamera und/oder Zeitregime für eine Projektoreinheit, wie insbesondere Zeitregime für Winkelstellungen wenigstens eines einzelnen Spiegelarrays, vorzugsweise sämtlicher Spiegelarrays. Unter "bearbeiten" soll in diesem Zusammenhang insbesondere verstanden werden, dass die Recheneinheit zu einer Weiterleitung des Bilddatenpakets oder zumindest eines Teils des Bilddatenpakets an eine dritte Einheit, wie insbesondere an eine Kamera, und/oder besonders vorteilhaft zu einer Aufspaltung des Bilddatenpakets vorgesehen ist. Insbesondere soll unter einer "Aufspaltung" dabei verstanden werden, dass Teile eines zusammenhängenden Datenstreams des Bilddatenpakets den zumindest zwei Bildern zugeordnet werden, so dass die zumindest zwei Bilder, insbesondere getrennt voneinander, dargestellt bzw. projiziert werden können, und/oder dass einzelne Teile des Bilddatenpakets weitergeleitet werden können, wie beispielsweise an eine Kamera. Die Zuordnung der Teile des Bilddatenpakets kann dabei auf verschiedene, dem Fachmann als sinnvoll erscheinende Arten erfolgen, wie vorzugsweise indem Teilen des Datenstreams Adressbereiche zugeordnet werden und/oder indem separate Speicherblöcke erstellt werden. Ein Bild ist dabei vorzugsweise durch eine Bitanzahl beschrieben, die sich aus einer Pixelanzahl des darzustellenden Bildes ergibt. Der Datenstream umfasst damit insbesondere zumindest eine Summe der Bits der einzelnen Bilder.

Die Recheneinheit ist ferner vorzugsweise dazu vorgesehen, eine Rechenfunktion durchzuführen, bei der insbesondere Daten des Bilddatenpakets zu einer Berechnung genutzt werden, wie insbesondere Daten eines Zeitregimes für Projektionen zur Berechnung von Parametern für Aufnahmen und Beleuchtung.

Ferner soll unter "bearbeiten" insbesondere verstanden werden, dass die Recheneinheit zumindest Teile des Bilddatenpakets für eine Steuerungsfunktion nutzt, und zwar besonders vorzugsweise für eine Steuerungsfunktion von dritten Einheiten, wie insbesondere einer Kamera. Dabei ist die Recheneinheit insbesondere dazu vorgesehen, einen zeitlichen Ablauf zu steuern, wie vorzugsweise einen zeitlichen Ablauf einzelner Projektionen und/oder einzelner Aufnahmen und/oder zumindest einer Projektion und einer Aufnahme, d.h. eine zeitliche Abstimmung der zumindest einen Projektion und der zumindest einen Aufnahme. Ferner kann die Recheneinheit vorteilhaft dazu vorgesehen sein, eine Kamerasteuerungsfunktion durchzuführen, wie insbesondere eine Funktion zur Steuerung einer Aufnahmezeit, einer Belichtungszeit und/oder einer Verstärkereinheit einer Kamera usw.

Ferner ist die Recheneinheit vorzugsweise dazu vorgesehen, zumindest eine Beleuchtungssteuerungsfunktion durchzuführen, wie insbesondere eine Funktion zur Steuerung einer Beleuchtungsdauer, Intensität und/oder Farbe.

Die Recheneinheit kann auch zur Steuerung weiterer, dem Fachmann als sinnvoll erscheinender Einheiten vorgesehen sein, wie beispielsweise zur Steuerung einer Werkzeugeinheit, wie vorzugsweise einer Werkzeughalteeinheit, wie beispielsweise einer Antriebseinheit einer Werkzeughaltespindel o.dgl., einer Datenverarbeitungseinheit, von der das Bilddatenpaket an den Lichtprojektor übermittelt wird, usw.

Ferner soll unter "bearbeiten" verstanden werden, dass die Recheneinheit dazu vorgesehen ist, zumindest Teile des Bilddatenpakets in einem Speicher, insbesondere in einem Speicher der Recheneinheit selbst, abzulegen, und zwar vorzugsweise in einer Form, so dass ohne weitere Bearbeitung die einzelnen Bilder projiziert werden können.

In einer weiteren Ausgestaltung des Lichtprojektors, der nicht Teil der Erfindung ist, ist in einem Speicher der Recheneinheit zumindest ein Projektionsarray fest gespeichert, wodurch ein Prozess mit dem Lichtprojektor, insbesondere ein Messprozess, weiter verkürzt werden kann. Unter einem "Projektionsarray" soll in diesem Zusammenhang insbesondere ein spezielles Bild verstanden werden, das vorzugsweise bei verschiedenen Prozessen, wie insbesondere verschiedenen Messabläufen von verschiedenen Werkzeugen, eingesetzt wird. Vorzugsweise ist das Projektionsarray dazu vorgesehen, bei einer Ausrichtung und/oder Justage genutzt zu werden. Insbesondere stellt zumindest ein Projektionsarray ein Fadenkreuz dar.

Ist der Lichtprojektor dazu vorgesehen, farbige Projektionen zu erzeugen, d.h. insbesondere Projektionen, die jeweils zumindest eine von Schwarz und Grauschattierungen abweichende Farbe aufweisen, wie Rot, Blau und/oder Grün usw., kann ein Prozess, insbesondere im Hinblick auf Präzision, weiter verbessert werden. Hierfür weist der Lichtprojektor vorzugsweise ein programmierbares Interface für eine Ansteuerung eines Mikrospiegelarrays auf, welches über mehrere Steuereingänge, vorzugsweise für Lichtquellen, wie insbesondere LEDs, und/oder Sensoren verfügt. Vorzugsweise können dadurch mehrere verschiedenfarbige Lichtquellen, wie vorzugsweise verschiedenfarbige monochrome LEDs gesteuert werden, und zwar vorzugsweise in Abhängigkeit von einem vorliegenden, zu vermessenden Objekt, wie insbesondere abhängig von Form und/oder Farbe des Objekts, von Reflexionen usw. Vorzugsweise können rote, grüne und blaue Lichtquellen eingesetzt werden.

Zudem wird ein System mit einem Lichtprojektor beschrieben, wobei das System nicht Teil der Erfindung ist. Vorzugsweise sind dabei zumindest einzelne Parameter der Kamera und des Lichtprojektors unabhängig voneinander einstellbar. Insbesondere sind eine Belichtung der Kamera, d.h. insbesondere

Lichtempfindlichkeit und/oder Belichtungsdauer, und eine Belichtung des Lichtprojektors, d.h. insbesondere Belichtungsintensität, Belichtungszeit und/oder Lichtfarbe, unabhängig voneinander einstellbar. Bei einer sehr dunklen Oberfläche können dann die Parameter des Lichtprojektors so gesetzt werden, dass möglichst viel Licht auf die Oberfläche fällt und die Parameter der Kamera können zusätzlich so eingestellt werden, dass sie möglichst lichtempfindlich reagiert. Es kann vorteilhaft eine Intensitätssteuerung von Projektionsmustern über eine Beleuchtung des Lichtprojektors, gesteuert durch die Recheneinheit des Lichtprojektors, erreicht werden.

Ferner weist die Kamera eine Recheneinheit auf, die zumindest eine Bilddatenpaketbearbeitungsfunktion aufweist. Somit können vorteilhaft mehrere Recheneinheiten, insbesondere mehrere Prozessoren, genutzt und Rechenprozesse beschleunigt werden. Es kann eine verteilte Intelligenz erreicht werden. Hierzu sind die Recheneinheiten vorzugsweise mit Bussystemen verbunden. Insbesondere können bereits bei einer Aufnahme und/oder unmittelbar nach einer Aufnahme mittels der Recheneinheit der Kamera Berechnungsvorgänge, wie insbesondere Auswertungsvorgänge, durchgeführt und sich daraus ergebende Ergebnisse für weitere Einheiten, wie insbesondere für den Lichtprojektor und/oder dessen Steuerung, genutzt werden.

Ferner wird ein System, das nicht Teil der Erfindung ist, mit einer Objekteinheit mit einer Objektebene und mit dem Lichtprojektor beschrieben, der eine optische Korrektur aufweist, die dazu vorgesehen ist, eine bedingt durch einen Triangulationswinkel verursachte Verzerrung zumindest teilweise zu entzerren, wobei der Lichtprojektor vorzugsweise eine Projektorbildebene und eine optische Achse sowie eine Objektivebene aufweist und die optische Korrektur vorzugsweise zumindest teilweise durch eine Anordnung der Projektorbildebene und der optische Achse in einem Tiltwinkel ungleich 45° und vorzugsweise ungleich 0° gebildet ist und wobei sich die Objektebene, die Projektorbildebene und die Objektivebene des Lichtprojektors zumindest im Wesentlichen in einer Gerade schneiden. Durch eine entsprechende Ausgestaltung kann eine Entzerrung besonders vorteilhaft erreicht werden. Insbesondere kann eine Korrektur nach Scheimpflug erreicht werden. Darunter, dass sich die Ebenen "zumindest im Wesentlichen in einer Geraden schneiden" soll insbesondere verstanden werden, dass eine Abweichung von einem korrekten Schnitt in einer Geraden eine Verzerrung bedingt, die kleiner ist als 5% und besonders vorzugsweise kleiner ist als 1% in all ihren Dimensionen. Unter einer "Objektivebene" soll in diesem Zusammenhang insbesondere eine Linsenebene des Lichtprojektors verstanden werden, auf der insbesondere ein Fokuspunkt des Lichtprojektors liegt, und/oder insbesondere eine Ebene, die senkrecht zur optischen Achse des Lichtprojektors verläuft. Unter einer "Objektebene" soll in diesem Zusammenhang insbesondere eine Ebene eines zu vermessenden Objekts, insbesondere eines Werkzeugs, verstanden werden, auf die mittels des Lichtprojektors Bilder während eines Erfassungsprozesses, insbesondere während eines Messprozesses, projiziert werden.

In einer weiteren Ausgestaltung wird ein Verfahren mit dem Lichtprojektor und insbesondere mit dem System, mit einem Verfahrensschritt beschrieben, bei dem dem Lichtprojektor das Bilddatenpaket zur weiteren Bearbeitung übermittelt wird. Ferner werden zumindest zwei verschiedene Codierungsverfahren in Kombination verwendet, wodurch eine erhöhte Präzision erreicht werden kann. Dabei sind verschiedene, dem Fachmann als sinnvoll erscheinende Codierungsverfahren einsetzbar, wie insbesondere Gray-Code-Verfahren, Phasen-Shift-Verfahren und/oder Binär-Code-Verfahren usw., die in verschiedenen, dem Fachmann als sinnvoll erscheinenden Kombinationen und Reihenfolgen angewandt werden können.

Der Schutzumfang der Erfindung ist in den Verfahrensansprüchen 1 bis 5 definiert.

In einer Ausgestaltung der Erfindung wird ein Verfahren zu einer Kalibrierung eines Lichtprojektors vorgeschlagen, der eine optische Korrektur aufweist, die dazu vorgesehen ist, eine bedingt durch einen Triangulationswinkel verursachte Verzerrung zumindest teilweise zu entzerren, und besonders vorteilhaft eine Projektorbildebene und eine optische Achse aufweist, wobei die optische Korrektur vorzugsweise zumindest teilweise durch eine Anordnung der Projektorbildebene und der optischen Achse in einem Tiltwinkel ungleich 45° und vorzugsweise ungleich 0° gebildet ist, wobei in einem Kalibriermodell die optische Korrektur berücksichtigt wird und wobei eine virtuelle Projektorbildebene bestimmt wird. Dadurch kann einfach eine besonders hohe Präzision erreicht werden, und zwar insbesondere, wenn der Tiltwinkel des Lichtprojektors berücksichtigt wird. Unter "zumindest teilweise entzerren" soll dabei verstanden werden, dass eine durch den Triangulationswinkel entstandene Verzerrung zumindest reduziert wird, vorzugsweise in zumindest einem Bereich um zumindest 10% und vorzugsweise um zumindest 50%. Unter einer "optischen Korrektur" soll dabei insbesondere eine von einer rechnerischen Korrektur abweichende Korrektur, insbesondere mittels optischer Korrekturmittel, wie insbesondere mittels Linsen und/oder Spiegeln, und/oder eine spezielle Anordnung von optischen Mitteln, wie Beleuchtung, Spiegeln, Linsen und/oder optischen Ebenen usw., verstanden werden. Die optische Korrektur kann von verschiedenen, dem Fachmann als sinnvoll erscheinenden Einheiten und/oder Anordnungen im Lichtprojektor gebildet sein, wie beispielsweise einer Linseneinheit usw. Besonders vorteilhaft wird die optische Korrektur jedoch zumindest teilweise durch eine Anordnung einer Projektorbildebene des Lichtprojektors und einer optischen Achse des Lichtprojektors in einem Tiltwinkel ungleich 45° und insbesondere auch ungleich 0° gebildet, wodurch vorteilhaft auf zusätzliche Bauteile für die optische Korrektur verzichtet werden kann. Die Projektorbildebene wird dabei vorzugsweise von einem Mikrospiegelarray gebildet. Unter einer "virtuellen Projektorbildebene" soll dabei eine Ebene verstanden werden, die parallel zur Projektorbildebene ausgerichtet ist und um eine doppelte Fokusstrecke in Richtung einer optischen Achse des Lichtprojektors verschoben ist. Ein erfindungsgemäßes Kalibriermodell wird erreicht, wenn ein Hauptpunkt des Streifenprojektors bestimmt und eine äquivalente Fokusstrecke berechnet wird. Unter einem Hauptpunkt soll ein Punkt auf der virtuellen Projektorbildebene verstanden werden, durch den eine Hauptgerade verläuft, die senkrecht auf der virtuellen Projektorbildebene steht und einen Fokuspunkt des Lichtprojektors schneidet. Ferner soll unter einer äquivalenten Fokusstrecke eine Strecke entlang der Hauptgeraden zwischen dem Fokuspunkt des Lichtprojektors und der virtuellen Projektorbildebene verstanden werden.

Ferner wird erfindungsgemäß vorgeschlagen, dass zumindest ein Wert für ein äquivalentes optisches Zentrum des Lichtprojektors unter Berücksichtigung des Tiltwinkels berechnet wird, wodurch der Tiltwinkel vorteilhaft einfach im Kalibriermodell berücksichtigt werden kann.

In einer weiteren Ausgestaltung der Erfindung wird vorgeschlagen, dass ein 2-dimensionales Kalibriermessobjekt verwendet wird, wodurch eine kostengünstige und einfache Kalibrierung erreicht werden kann. Unter einem "2-dimensionalen Kalibriermessobjekt" soll dabei insbesondere verstanden werden, dass eine zu vermessende Fläche des Kalibriermessobjekts zumindest im Wesentlichen von einer Ebene gebildet wird. Unter "zumindest im Wesentlichen" soll allgemein verstanden werden, dass eine Abweichung kleiner als 10%, vorzugsweise kleiner als 5 % und ganz besonders bevorzugt kleiner als 1 % vorliegt und/oder eine Abweichung kleiner als 5 mm, vorzugsweise kleiner als 1 mm und ganz besonders bevorzugt kleiner als 0,01 mm vorliegt, und zwar im vorliegenden Fall insbesondere von einer theoretischen Ebene mit einer perfekten Ebenheit.

Besonders vorteilhaft wird ein Kalibriermessobjekt bei der Kalibrierung verkippt, wodurch vorteilhaft dreidimensionale Werte aufgenommen werden können. Vorzugsweise wird das Kalibriermessobjekt um mehrere Achsen verkippt. Unter "bei der Kalibrierung verkippt" soll dabei insbesondere verstanden werden, dass das Kalibriermessobjekt bei zumindest einer Aufnahme bei der Kalibrierung verkippt angeordnet ist und vorzugsweise auch bei der Kalibrierung verschiedene Kipppositionen einnimmt.

Zudem wird vorgeschlagen, dass ein Kalibriermessobjekt mit einer inversen Farbgestaltung verwendet wird, d.h. dass zu erfassende Formen, insbesondere 2-dimensionale Formen, wie beispielsweise Streifen und/oder vorteilhaft Kreisflächen, hell, insbesondere weiß sind, und ein Hintergrund dunkel, insbesondere schwarz ist. Dadurch können vorteilhaft zur Kalibrierung Projektionen direkt auf die hell dargestellten Formen projiziert und der Kalibrierablauf vereinfacht werden. Unter "Streifen" sollen in diesem Zusammenhang Linien eines Linienmusters verstanden werden, die eine Form einer Geraden aufweisen. Unter einem "Linienmuster" soll in diesem Zusammenhang ein Muster aus Linien unterschiedlicher Helligkeit verstanden werden. Insbesondere kann eine dunkle Linie dadurch erzeugt werden, dass das Bild in einem Bereich dieser Linie unbeleuchtet ist. Beispielsweise kann ein Linienmuster durch benachbarte beleuchtete und unbeleuchtete Linien erzeugt werden. Unter einer "Linie" soll in diesem Zusammenhang eine Strecke zwischen zumindest zwei Punkten verstanden werden, wobei die Linie grundsätzlich durch eine beliebige Anzahl von Punkten verlaufen kann. Insbesondere ist jeder Linie eine Helligkeit und eine Breite zugeordnet. Die Linien können sich beispielsweise in Hinblick auf die Breite, auf eine Länge oder einen Verlauf innerhalb desselben Bildes oder zwischen unterschiedlichen Bildern unterscheiden. Die Linien können beispielsweise als Streifen ausgebildet sein, die waagrecht, senkrecht oder diagonal angeordnet sind, aber auch andere Linienformen, beispielsweise als Kreisringe oder Kreisausschnitte, sind vorstellbar.

Ferner wird eine Vorrichtung zur Durchführung des erfindungsgemäßen Verfahrens zur Kalibrierung beschrieben. Die Vorrichtung umfasst dabei vorzugsweise eine Recheneinheit, die dazu vorgesehen ist, das Verfahren durchzuführen. Vorteilhaft kann die Recheneinheit zumindest teilweise einstückig mit der Recheneinheit des Lichtprojektors, der Kamera und/oder mit der Recheneinheit ausgebildet sein, die dazu vorgesehen ist, das Bilddatenpaket an den Lichtprojektor zu übermitteln.

**Zeichnungen**

Weitere Vorteile ergeben sich aus der folgenden Zeichnungsbeschreibung. In den Zeichnungen 2 bis 4 ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, solange die sich ergebenden Merkmale und Kombinationen innerhalb des Schutzbereichs der Erfindung bleiben, wobei der Schutzbereich in den Ansprüchen definiert ist.

Es zeigen:

Fig. 1 ein schematisch dargestelltes System mit einem Lichtprojektor, einer Kamera, einer Objekteinheit sowie einer Recheneinheit zur Übermittlung eines Bilddatenpakets an den Lichtprojektor,

Fig. 2 eine schematische Darstellung eines ersten Verfahrensschritts zu einer Kalibrierung,

Fig. 3 eine schematische Darstellung eines zweiten Verfahrensschritt zur Kalibrierung,

Fig. 4 eine schematische Darstellung eines dritten Verfahrensschritts zur Kalibrierung und

Fig. 5 ein Kalibriermessobjekt.

Beschreibung des Ausführungsbeispiels

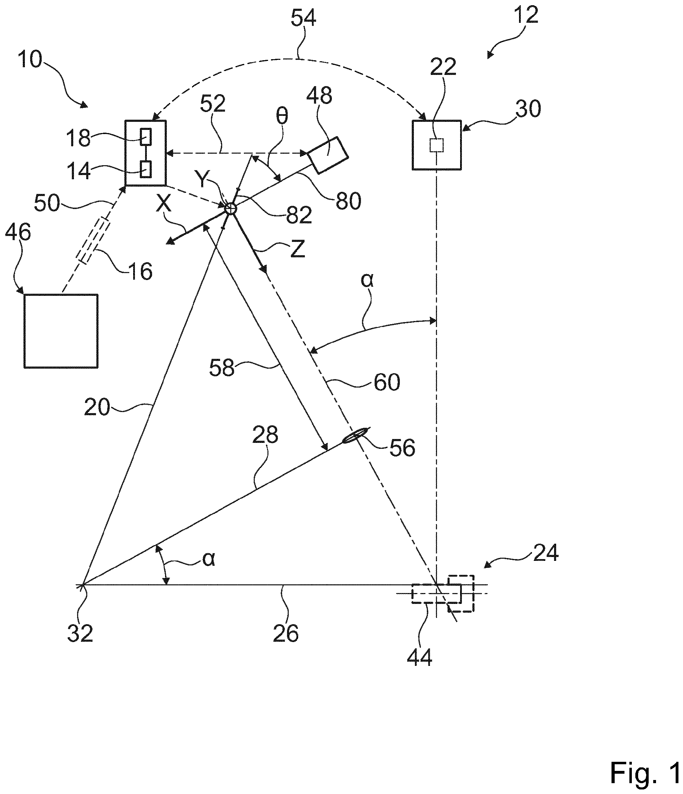

Figur 1 zeigt eine schematisch dargestelltes System, und zwar insbesondere ein schematisch dargestelltes Werkzeugmessgerät 12, mit einem Lichtprojektor 10, der eine Recheneinheit 14 aufweist, die dazu vorgesehen ist, ein Bilddatenpaket 16 zu bearbeiten. Das System umfasst hierfür eine weitere Recheneinheit 46, die dazu vorgesehen ist, das Bilddatenpaket 16 in einem Messverfahrensschritt an den Lichtprojektor 10 zu senden. Die Recheneinheit 14 umfasst dabei einen Prozessor und einen Speicher 18, indem ein Betriebsprogramm gespeichert ist.

Die Recheneinheit 14 ist dazu vorgesehen, das Bilddatenpaket 16, das Bilddaten von zwölf Bildern umfasst, aufzuspalten, so dass die zwölf Bilder zumindest teilweise einzeln in einer gewünschten Reihenfolge auf ein Messobjekt 44, und zwar auf ein Werkzeug, projiziert werden können, um dessen Schneidkanten dreidimensional zu erfassen und zu vermessen, und zwar insbesondere, um eine Schneidkantenverrundung zu erfassen. Die zwölf Bilder werden in einem zusammenhängenden Datenstream des Bilddatenpakets 16 von der weiteren Recheneinheit 46 an die Recheneinheit 14 gesandt. Eine Kamera 30 des Systems und der Lichtprojektor 10 sind dazu vorgesehen, Messvorgänge durchzuführen, die im μ-Bereich liegen. Die 12 Bilder können nach dem Aufspalten grundsätzlich in beliebiger Reihenfolge nacheinander, getrennt voneinander oder auch zumindest teilweise überschneidend projiziert werden. Die Bilder enthalten jeweils eine Abbildungsvorschrift für ein Muster, das auf das Messobjekt 44 projiziert wird. Bevorzugt beschreibt das Muster ein Linienmuster aus hellen und dunklen Linien. Die Linien können beispielsweise als Streifen ausgebildet sein, die waagrecht, senkrecht oder diagonal verlaufen, aber auch andere Linienmuster, wie beispielsweise Ringmuster aus Kreisringen oder Kreisausschnitten sind möglich. Die Linien können sich beispielsweise in Hinblick auf eine Helligkeit, eine Dicke, eine Länge oder einen Verlauf innerhalb desselben Bildes oder zwischen unterschiedlichen Bildern unterscheiden. Bei einer zumindest teilweise überschneidenden Projektion der Bilder können aus einzelnen Grundmustern neu Muster erstellt werden, beispielsweise könnte ein Rastermuster mit unterschiedlich dicken Streifen durch eine überlagerte Projektion eines Bilds mit einem Muster aus dicken waagrechten Streifen und eines Bilds mit einem Muster aus dünnen senkrechten Streifen erzeugt werden.

Die Recheneinheit 14 ist zudem dazu vorgesehen, das Bilddatenpaket 16 in dem Speicher 18 der Recheneinheit 14 abzulegen. Insbesondere legt die Recheneinheit 14 nach einer Aufspaltung des Bilddatenpakets 16 in die einzelnen Bilder die einzelnen Bilder in dem Speicher 18 ab.

Die Recheneinheit 14 ist ferner dazu vorgesehen, Steuerungsfunktionen durchzuführen. Die Recheneinheit 14 steuert einen zeitlichen Ablauf von Projektionen des Lichtprojektors 10 und von Aufnahmen der Kamera 30 des Systems und ist damit auch dazu vorgesehen, eine Kamerasteuerungsfunktion durchzuführen. Ferner ist die Recheneinheit 14 dazu vorgesehen, zumindest eine Beleuchtungssteuerungsfunktion einer Beleuchtung 48 des Lichtprojektors 10 durchzuführen. Die Recheneinheit 46, die Recheneinheit 14 des Lichtprojektors 10, die Beleuchtung 48 und die Kamera 30 sind dabei mit Busleitungen 50, 52, 54 verbunden. Die Recheneinheit 14 steuert dazu den zeitlichen Ablauf der Projektionen des Lichtprojektors 10 und der Aufnahmen der Kamera 30 des Systems so, dass jeweils für jedes projizierte Bild eine Aufnahme des Messobjekts 44 mit dem darauf projizierten Bild gemacht wird.

Zur Messung der Schneidkanten des Werkzeugs wird von der Recheneinheit 14 des Lichtprojektors 10 das Bilddatenpaket 16 in einzelne Bilder aufgespalten. Die einzelnen Bilder sind bevorzugt Linienmuster mit hellen und dunklen Linien. Die Recheneinheit 14 berechnet aus den einzelnen Bildern eine Abbildungsvorschrift zur Ansteuerung des Lichtprojektors und steuert anschließend den Lichtprojektor 10 und die Kamera 30 so an, dass die Bilder nacheinander auf das Messobjekt 44 projiziert werden, wobei die einzelnen Bilder alle getrennt voneinander oder auch mehrere Bilder zumindest teilweise überschneidend projiziert werden, und die projizierten Bilder durch die Kamera 30 aufgenommen werden. Die Linien des Linienmusters bestimmen eine Lichtebene im Raum. Eine Bildkoordinate in einer Aufnahme der Kamera 30 bestimmt eine Gerade, die einen aufgenommenen Objektpunkt mit der Kamera 30 verbindet. Aus einem Schnittpunkt der Gerade und der Lichtebene und den Positionen des Lichtprojektors 10 und der Kamera 30 wird die dreidimensionale Position des aufgenommenen Objektpunkts bestimmt. Aus den dreidimensionalen Positionen der aufgenommenen Objektpunkte der Bilder wird die dreidimensionale Form des Messobjekts 44 erfasst. Aus der dreidimensionalen Form des Messobjekts 44 wird dann die Schneidkante und insbesondere eine Schneidkantenverrundung bestimmt.

Einzelne Parameter der Kamera 30, wie insbesondere Belichtung, und Parameter des Lichtprojektors 10, wie insbesondere eine Beleuchtungsstärke der Beleuchtung 48, sind unabhängig voneinander einstellbar, und zwar insbesondere unabhängig voneinander regelbar, wodurch eine hohe Dynamik erreicht werden kann, ohne einen elektronischen Gain, insbesondere der Kamera 30, zu nutzen. Insbesondere könnte ferner auch ein Gain der Kamera 30 unabhängig von anderen Parametern regelbar ausgeführt sein. Beispielsweise kann bei einer sehr dunklen Oberfläche des Messobjekts 44 die Beleuchtungsstärke der Beleuchtung 48 erhöht werden und unabhängig davon eine Lichtempfindlichkeit der Kamera 30 erhöhen werden.

Bei dem vorliegenden Ausführungsbeispiel weist der Lichtprojektor 10, der nicht Teil der Erfindung ist, nachdem das Bilddatenpaket 16 übersandt ist, alle Bilddatenpaketbearbeitungsfunktionen auf. Die Kamera 30 ist von einer Bearbeitung des Bilddatenpakets entkoppelt und weist somit keine Bilddatenpaketbearbeitungsfunktion auf. Eine Recheneinheit 22 der Kamera 30 kann damit ausschließlich für Aufnahmen und eine Weiterleitung der Aufnahmen zur weiteren Auswertung und/oder auch zumindest teilweise bereits zu einer Auswertung der Aufnahmen genutzt werden. Alternativ könnte jedoch die Recheneinheit 22 der Kamera 30 auch eine Bilddatenpaketbearbeitungsfunktion aufweisen, beispielsweise könnten Teile des Bilddatenpakets 16 an die Recheneinheit 22 der Kamera 30 zur weiteren Bearbeitung übermittelt werden, so dass insbesondere eine verteilte Intelligenz erreicht und für bestimmte Rechenvorgänge eine insgesamt hohe Rechenleistung zur Verfügung gestellt werden kann.

In dem Speicher 18 der Recheneinheit 14 ist ein Projektionsarray in Form eines Fadenkreuzes fest gespeichert, das dazu genutzt wird, mit einem in der Kamera 30 und/oder einer Software vorgesehenen Fadenkreuz in Übereinstimmung gebracht zu werden und somit eine Ausrichtung vorzunehmen.

Der Lichtprojektor 10 ist dazu vorgesehen, farbige Projektionen zu erzeugen. Hierfür weist die Beleuchtung 48 des Lichtprojektors 10 mehrere verschiedenfarbige LEDs auf, und zwar eine blaue, eine grüne und eine rote LED.

Der Lichtprojektor 10 weist eine optische Korrektur auf, die dazu vorgesehen ist, eine bedingt durch einen

Triangulationswinkel $\alpha$ von ca. 30° verursachte Verzerrung zu entzerren. Der Lichtprojektor 10 weist eine von Mikrospiegeln gebildete Projektorbildebene 20 und eine optische Achse 60 auf, wobei die optische Korrektur durch eine Anordnung der Projektorbildebene 20 und der optischen Achse 60 in einem Tiltwinkel $\theta$ ungleich 45° und ungleich 0°, und zwar von ca. 39,5°, und durch eine Anordnung einer Objektebene 26 einer Objekteinheit 24 des Systems, einer Objektivebene 28 des Lichtprojektors 10 und der Projektorbildebene 20, so dass sich diese in einer Geraden 32 schneiden und somit die Scheimpflugbedingungen erfüllen, gebildet ist. Eine digitale Korrektur kann entfallen. Die Mikrospiegel bilden eine Bildfläche 82 des Lichtprojektors 10. Die Objektivebene 28 wird von einer nicht näher dargestellten Optik des Lichtprojektors 10 gebildet. Die Optik wird von einer perspektivischen Optik gebildet. Es sind jedoch auch andere, dem Fachmann als sinnvoll erscheinende Optiken denkbar. Die Kamera 30 weist eine telezentrische Optik auf, die eine Kamerabildebene 68 bildet, jedoch kann auch diese von einer anderen, dem Fachmann als sinnvoll erscheinenden Optik gebildet sein. Die optische Achse 60 bildet dabei eine Z-Achse eines Koordinatensystems des Lichtprojektors 10, auf der X- und Y-Achsen des Koordinatensystems des Lichtprojektors 10 senkrecht stehen. Die X-Achse des Koordinatensystems des Lichtprojektors 10 verläuft entlang einem auf die Projektorbildebene 20 fallenden Lichtstrahl 80 der Beleuchtung 48 des Lichtprojektors 10.

Bei einem Messablauf werden verschiedene Codierungsverfahren einzeln oder in Kombination verwendet, und zwar z.B. Gray-Code-Verfahren, Phasen-Shift-Verfahren und Binär-Code-Verfahren, d.h. es werden insbesondere Gray-Code-Bilder, Phasen-Shift-Bilder oder andere Binär-Code-Bilder auf das zu vermessende Messobjekt 44 projiziert.

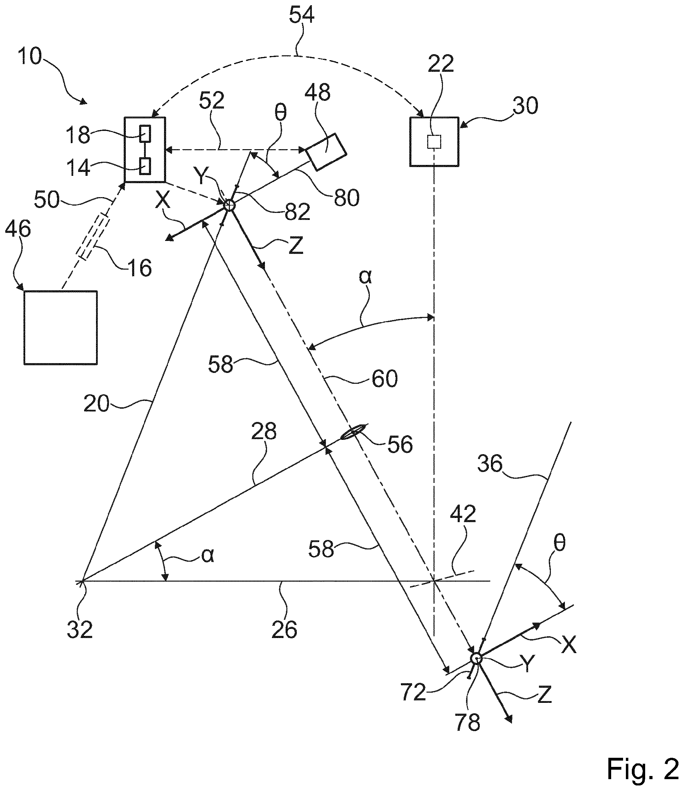

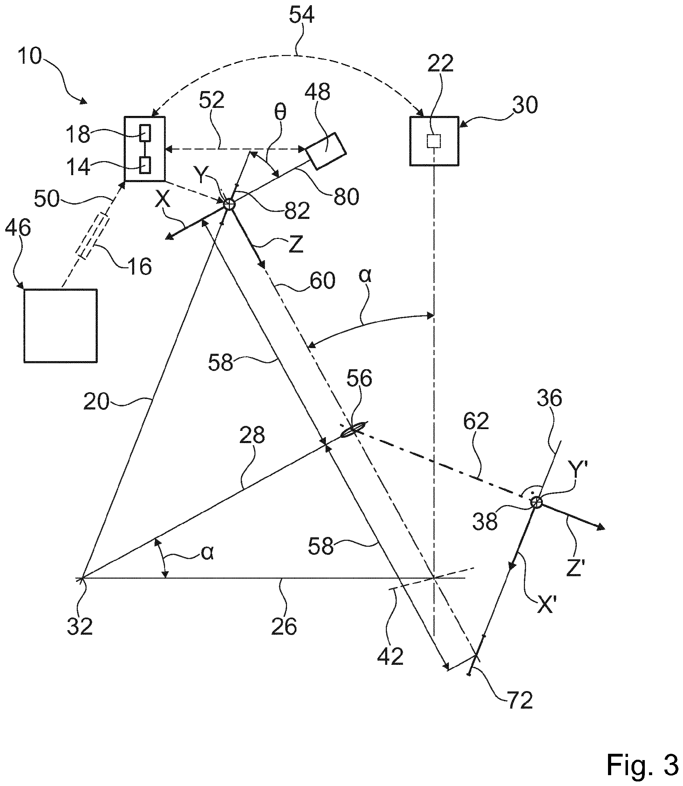

Bei einem Verfahren zur Kalibrierung des Lichtprojektors 10 wird in einem Kalibriermodell 34 die optische Korrektur, d.h. der Tiltwinkel $\theta$ berücksichtigt (vgl. Figuren 2 bis 5). Hierzu wird eine virtuelle Projektorbildebene 36 bestimmt, und zwar durch eine Parallelverschiebung der Projektorbildebene 20 in Richtung eines Fokuspunkts 56, entlang der optischen Achse 60 um eine doppelte Fokusstrecke 58. Anschließend wird ein Hauptpunkt 38 des Lichtprojektors 10 bestimmt. Der Hauptpunkt 38 wird dabei von einem Punkt auf der virtuellen Projektorbildebene 36 gebildet, durch den eine Hauptgerade 62 verläuft, die senkrecht auf der virtuellen Projektorbildebene 36 steht und durch den Fokuspunkt 56 des Lichtprojektors 10 verläuft. Anschließend wird eine äquivalente Fokusstrecke 40 berechnet, die entlang der Hauptgeraden 62 zwischen dem Fokuspunkt 56 und der virtuellen Projektorbildebene 36 verläuft. Ferner wird ein Wert $G_{X'Äqui}$ für ein äquivalentes optisches Zentrum des Lichtprojektors 10, das auf einer virtuellen X'-Achse mit dem Hauptpunkt 38 zusammenfällt, unter Berücksichtigung des Tiltwinkels $\theta$ berechnet, und zwar mit:

$$C_{X'Äqui} = C_{X'} - \text{Fokusstrecke } 58 * \sin(\theta) \ / \ \text{Lichtprojektorpixelgröße } S_{X'}$$

Dabei wird auf der virtuellen X'-Achse, die eine Achse eines virtuellen Koordinatensystems des Lichtprojektors 10 bildet, in einer gemeinsamen Ebene mit den Achsen X und Z des Lichtprojektors 10 liegt und entlang der virtuellen Projektorbildebene 36 verläuft, ein Koordinatennullpunkt 70 an einem oberen Rand einer virtuellen Bildfläche 72 des Lichtprojektors 10 festgelegt. Die virtuelle Bildfläche 72 entspricht von der Größe der Bildfläche 82 des Lichtprojektors 10 und liegt auf der virtuellen Projektorbildebene 36. Ausgehend von dem Koordinatennullpunkt 70 ergeben sich unter Berücksichtigung einer vorliegenden Lichtprojektorpixelgröße $S_{X'}$ des Lichtprojektors 10, d.h. insbesondere einer Größe einzelner Mikrospiegel, ausgehend von dem Koordinatennullpunkt 70 eine Strecke 74 mit $C_X * S_{X'}$ und eine Strecke 76 mit $C_{XAqui} * S_{X'}$. Die Strecke 74 ist damit ein Abstand auf der virtuellen X'-Achse zwischen dem Koordinatennullpunkt 70 und einem optischen Zentrum 78, das sich ergeben würde ohne Tiltwinkel $\theta$, und die Strecke 76 ist damit ein Abstand auf der virtuellen X'-Achse zwischen dem Koordinatennullpunkt 70 und dem optischen Zentrum des Lichtprojektors 10, das sich unter Berücksichtigung des Tiltwinkels $\theta$ ergibt.

Zudem werden vorliegende Rotationen RotY', RotX' und RotZ' der Kamerabildebene 68 der Kamera 30 um Achsen X,' Y', Z' des virtuellen Koordinatensystems des Lichtprojektors 10 im Hauptpunkt 38 berechnet, wobei erwartete Werte bei

RotX' = 0,

RotZ' = 0 und

$$RotY' = 360° - \text{Triangulationswinkel} (\alpha) - \text{Tiltwinkel} (\theta) \text{ liegen.}$$

Bei der Kalibrierung werden Abbildungsgeometrien korrekt erfasst.

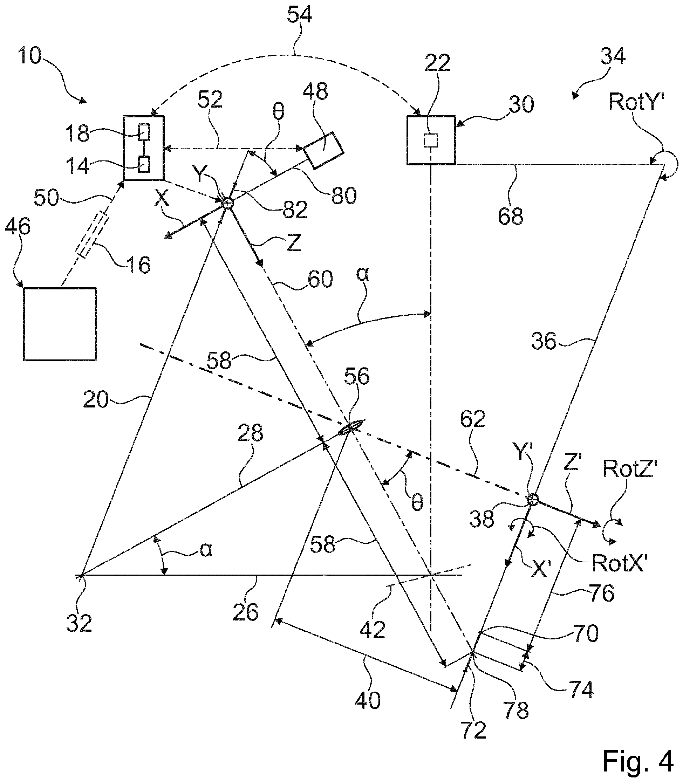

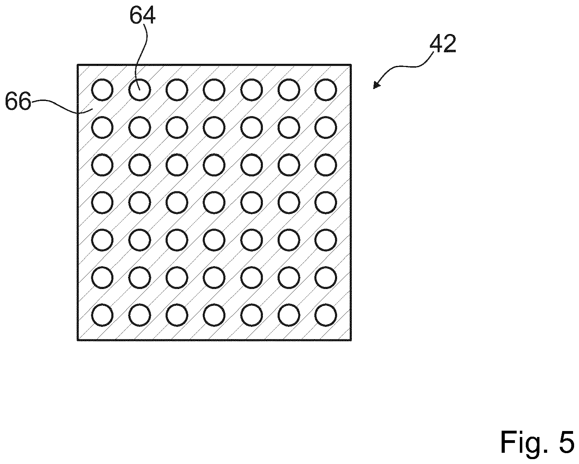

Bei der Kalibrierung wird ein 2-dimensionales Kalibriermessobjekt 42, und zwar eine Platte, mit einer inversen Farbgestaltung verwendet (Figuren 4 und 5). Das Kalibriermessobjekt 42 weist weiße Punkte 64 und einen dunklen Hintergrund 66 auf. Bei der Kalibrierung werden von dem Kalibriermessobjekt 42 verschiedene Aufnahmen gemacht, wobei das Kalibriermessobjekt 42 um verschiedene Achsen verkippt wird, und zwar vorzugsweise um jeweils ca. 10°, so dass die Punkte 64 noch scharf abgebildet werden können. Auf das Kalibriermessobjekt 42 projizierte Streifen können direkt auf den Punkten 64 rekonstruiert werden.

Ein Teil des Verfahrens zur Kalibrierung wird in der Recheneinheit 14 des Lichtprojektors 10 und ein Teil des Verfahrens zur Kalibrierung wird in der Recheneinheit 22 der Kamera 30 durchgeführt. Der Lichtprojektor 10 und die Kamera 30 bilden damit eine Vorrichtung zur Durchführung des Verfahrens zur Kalibrierung. Grundsätzlich könnte jedoch auch zusätzlich oder alternativ eine andere Recheneinheit genutzt werden.

Bei der Kalibrierung werden zur Bestimmung von Initialpositionen horizontale und vertikale Streifenmuster ausgewertet. Anschließend werden Koordinaten des Lichtprojektors 10 in Koordinaten der Kamera 30 transformiert. Darauf basierend wird dann eine Initialposition des Lichtprojektors 10 relativ zu einem Koordinatensystem des Kalibriermessobjekts 42 bestimmt. Anschließend wird eine Initialposition der Kamera 30 bestimmt. Anschließend werden 25 bis 30 Aufnahmen unter verschiedenen Orientierungen des Kalibriermessobjekts 42 durchgeführt. Anschließend können Re-Kalibrierungen mit verbesserten Start-Parametern durchgeführt werden.

## Patentansprüche

1. Verfahren zur Kalibrierung eines Lichtprojektors (10) eines Werkzeugmessgeräts (12) mit einer Kamera (30) und mit dem Lichtprojektor (10), welcher eine optische Korrektur und eine Lichtprojektorpixelgrösse (Sx) aufweist, wobei die optische Korrektur dazu vorgesehen ist, eine bedingt durch einen Triangulationswinkel ($\alpha$) verursachte Verzerrung zumindest teilweise zu entzerren, wobei bei dem Verfahren zur Kalibrierung des Lichtprojektors (10) in einem Kalibriermodell (34) die optische Korrektur berücksichtigt wird, wobei die optische Korrektur zumindest teilweise durch eine Anordnung einer Projektorbildebene (20) des Lichtprojektors (10) und einer optischen Achse (60) des Lichtprojektors in einem Tiltwinkel ($\theta$) gebildet ist und somit der Tiltwinkel ($\theta$) des Lichtprojektors (10) in dem Kalibriermodell (34) berücksichtigt wird, **dadurch gekennzeichnet, dass**:

   - das Kalibriermodel erreicht wird, wenn ein Hauptpunkt (38) des Lichtprojektors bestimmt wird und wenn eine äquivalente Fokusstrecke (40) sowie ein äquivalentes optisches Zentrum berechnet werden, wodurch der Tiltwinkel im Kalibriermodell berücksichtigt wird, und wodurch ein Koordinatennullpunkt (70) festgelegt wird,
   - durch eine Parallelverschiebung der Projektorbildebene (20) in Richtung eines Fokuspunkts (56) des Lichtprojektors (10), entlang der optischen Achse (60) um eine doppelte Fokusstrecke (58) eine virtuelle Projektorbildebene (36) bestimmt wird, wobei anschließend ein Hauptpunkt (38) des Lichtprojektors (10) bestimmt wird, wobei der Hauptpunkt (38) gebildet wird von einem Punkt auf der virtuellen Projektorbildebene (36), durch den eine Hauptgerade (62) verläuft, die senkrecht auf der virtuellen Projektorbildebene (36) steht und durch den Fokuspunkt (56) des Lichtprojektors (10) verläuft, wobei anschließend eine äquivalente Fokusstrecke (40) berechnet wird, die entlang der Hauptgeraden (62) zwischen dem Fokuspunkt (56) und der virtuellen Projektorbildebene (36) verläuft, und wobei anschließend zumindest ein Wert ($C_{X'Äqui}$) für ein äquivalentes optisches Zentrum des Lichtprojektors (10), das auf einer virtuellen X'-Achse mit dem Hauptpunkt (38) zusammenfällt, unter Berücksichtigung des Tiltwinkels ($\theta$) mit der Formel

   $$C_{X'Äqui} = C_{X'} - \text{Fokusstrecke (58)} * \sin(\theta) / \text{Lichtprojektorpixelgröße } S_{X'}$$

   berechnet wird, wodurch auf der virtuellen X'-Achse ein Koordinatennullpunkt (70) an einem oberen (20) Rand einer virtuellen Bildfläche (72) des Lichtprojektors (10) festgelegt wird, wobei die virtuelle X'-Achse, die eine Achse eines virtuellen Koordinatensystems des Lichtprojektors bildet, in einer gemeinsamen Ebene mit dem Achse X und Z des Lichtprojektors liegt und entlang der virtuellen Projektorbildebene verläuft, und wobei $C_{X'}$ ein Wert für ein optisches Zentrum des Lichtprojektors ohne Tiltwinkel ergeben würde.

2. Verfahren nach Anspruch 1, **dadurch gekennzeichnet, dass** ein 2-dimensionales Kalibriermessobjekt (42) verwendet wird, von dem bei der Kalibrierung verschiedene Aufnahmen gemacht werden.

3. Verfahren nach Anspruch 2, **dadurch gekennzeichnet, dass** das Kalibriermessobjekt (42) bei der Kalibrierung um verschiedene Achsen verkippt wird.

4. Verfahren nach einem der vorhergehenden Ansprüche, **dadurch gekennzeichnet, dass** ein beziehungsweise das Kalibriermessobjekt (42) mit einer zueinander inversen Farbgestaltung verwendet wird, wobei zu erfassende Formen des Kalibriermessobjekts (42) weiß sind und ein Hintergrund (66) schwarz ist.

**5.** Verfahren nach einem der vorhergehenden Ansprüche, **dadurch gekennzeichnet, dass** zumindest ein Teil des Kalibrierverfahrens in einer Recheneinheit (14) des Lichtprojektors (10) und/oder in einer Recheneinheit (22) einer Kamera (30) durchgeführt wird.

**Claims**

**1.** Method for calibrating a light projector (10) of a tool measuring apparatus (12) with a camera (30) and with the light projector (10), which has an optical correction and a light projector pixel size (Sx),
wherein the optical correction is configured to at least partially undo a distortion caused by a triangulation angle ($\alpha$),
wherein the optical correction is taken into account in the method for calibrating the light projector (10) in a calibration model (34),
wherein the optical correction is realized at least partially by an arrangement of a projector image plane (20) of the light projector (10) and an optical axis (60) of the light projector in a tilt angle ($\theta$), the tilt angle ($\theta$) being thus considered in the calibration model (34),
**characterised in that**

- the calibration model (34) is achieved when a principal point (38) of the light projector (10) is determined and when an equivalent focal distance (40) as well as an equivalent optical centre are calculated, as a result of which the tilt angle is considered in the calibration model, and a coordinate zero point (70) is defined as a result,
- a virtual projector image plane (36) is determined by a parallel translation of the projector image plane (20) by a double focal distance (58) along the optical axis (60) towards a focal point (56) of the light projector (10),

wherein after this a principal point (38) of the light projector (10) is determined,
wherein the principal point (38) is implemented as a point on the virtual projector image plane (36), which a principal straight line (62) extends through that is perpendicular to the virtual projector image plane (36) and runs through the focal point (56) of the light projector (10),
wherein after this an equivalent focal distance (40) is calculated, which extends along the principal straight line (62) between the focal point (56) and the virtual projector image plane (36), and
wherein then, under consideration of the tilt angle ($\theta$) with the formula $C_{X'Äqui}$ = Cx' - focal distance (58) * sin($\theta$)/light projector pixel size Sx,
at least one value ($C_{X'Äqui}$) is calculated for an equivalent optical centre of the light projector (19) which coincides with the principal point (38) on a virtual X'-axis,
as a result of which a coordinate zero point (70) is defined on an upper edge (20) of a virtual image surface (72) of the light projector (10),
wherein the virtual X'-axis, which forms an axis of a virtual coordinate system of the light projector (10), is situated in a common plane with the axes X and Z of the light projector and extends along the virtual projector image plane, and
wherein Cx' would give a value for an optical centre of the light projector without the tilt angle.

**2.** Method according to claim 1,
**characterised in that** a two-dimensional calibration measuring object (42) is used, of which a variety of recordings are made during calibration.

**3.** Method according to claim 2,
**characterised in that** the calibration measuring object (42) is tilted around different axes during calibration.

**4.** Method according to one of the preceding claims,
**characterised in that** a calibration measuring object (42), respectively the calibration measuring object (42), is used with a mutually inverse colour scheme, wherein shapes of the calibration measuring object (42) which are to be captured are white and a background (66) is black.

**5.** Method according to one of the preceding claims,
**characterised in that** at least a portion of the calibration measuring method is carried out in a computing unit (14) of the light projector (10) and/or in a computing unit (22) of a cameral (30).

**Revendications**

1. Procédé de calibration d'un projecteur de lumière (10) d'un appareil de mesure d'outil (12), avec une caméra (30) et avec le projecteur de lumière (10) comprenant une correction optique et une taille de pixels de projecteur de lumière (Sx),

où la correction optique est prévue à au moins partiellement corriger une distorsion causée par un angle de triangulation ($\alpha$),

où la correction optique est prise en compte dans le procédé de calibration du projecteur de lumière (10) dans un modèle de calibration (34),

où la correction optique est formée au moins partiellement par un arrangement d'un plan image de projecteur (20) du projecteur de lumière (10) et un axe optique (60) du projecteur de lumière en un angle d'inclinaison ($\theta$), et donc l'angle d'inclinaison ($\theta$) du projecteur de lumière (10) est pris en compte dans le modèle de calibration (34), **caractérisé en ce que** :

- le modèle de calibration est obtenu si un point principal (38) du projecteur de lumière est déterminé et si une longueur focale (40) équivalente aussi qu'un centre optique équivalent sont calculés, moyennant quoi l'angle d'inclinaison est pris en compte dans le modèle de calibration et moyennant quoi un point zéro de coordonnées (70) est défini,
- un plan image virtuel de projecteur (36) est déterminé par une translation parallèle du plan image de projecteur (20) vers un point focal (56) du projecteur de lumière (10) par la longueur focale (58) doublée le long de l'axe optique (60),

où ensuite un point principal (38) du projecteur de lumière (10) est déterminé,

où le point principal (38) est réalisé par un point sur le plan image virtuel de projecteur (36), au travers duquel s'étend une ligne droite principale (62) qui est perpendiculaire au plan image virtuel de projecteur (36) et qui s'étend au travers du point focal (56) du projecteur de lumière (10),

où ensuite une longueur focale (40) équivalente est calculée, qui s'étend le long de la ligne droite principale (62) entre le point focal (56) et le plan image virtuel de projecteur (36), et

où ensuite au moins une valeur ($C_{X'\text{Äqui}}$) pour un centre optique équivalent du projecteur de lumière (10), qui coïncide avec le point principal (38) sur un axe X' virtuel, est calculée - prenant en compte l'angle d'inclinaison ($\theta$) - par la formule $C_{X'\text{Äqui}} = Cx'$ - longueur focale (58) * $\sin(\theta)$/taille de pixels de projecteur de lumière $S_{X'}$, moyennant quoi sur l'axe X' virtuel un point zéro de coordonnées (70) est défini sur un bord supérieur (20) d'une surface image virtuelle (72) du projecteur de lumière (10),

où l'axe X' virtuel, qui forme un axe d'un système virtuel de coordonnées du projecteur de lumière, est situé dans un plan commun avec les axes X et Z du projecteur de lumière et s'étend le long du plan image de projecteur virtuel, et

où Cx' donnerait une valeur pour un centre optique du projecteur de lumière sans l'angle d'inclinaison.

2. Procédé selon la revendication 1,
   **caractérisé en ce qu'**un objet de mesure-calibration à deux dimensions (42) est utilisé, duquel photos différentes sont prises pendant la calibration.

3. Procédé selon la revendication 2,
   **caractérisé en ce que** pendant la calibration l"objet de mesure-calibration (42) est incliné autour des axes différents.

4. Procédé selon l'une des revendications précédentes,
   **caractérisé en ce qu'**un objet de mesure-calibration (42) ou l'objet de mesure-calibration (42) est utilisé ayant une combinaison des couleurs inverses, les formes de l'objet de mesure-calibration (42) qui sont à être captés étant blanches et un fond (66) étant noir.

5. Procédé selon l'une des revendications précédentes,
   **caractérisé en ce qu'au** moins une partie du procédé de calibration est exécutée dans une unité ordinatrice (14) du projecteur de lumière (10) et/ou dans une unité ordinatrice (22) d'une caméra (30).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ZHANG, X. ; ZHU, L.** Projector calibration from the camera image point of view. *Optical Engineering,* November 2009, vol. 48 (11), 117208-1, 117208-13

- **HUANG, J. et al.** Calibration of camera-projector measurement system and error impact analysis. *Meas. Sci. Technol.,* Oktober 2012, vol. 23 (12), 125402-1, 125402-14